# EUROPEAN PATENT SPECIFICATION

(11) **EP 3 128 322 B1**
(45) Date of publication and mention of the grant of the patent: **06.09.2023**
(21) Application number: 16189843.2
(22) Date of filing: 28.10.2011
(51) Int. Cl.: G01N 30/46, G01N 30/60

(54) **APPARATUS FOR COUPLING TWO TUBINGS TO A CHROMATOGRAPHIC COLUMN**
VORRICHTUNG ZUR KOPPLUNG ZWEI SCHLAUCHLEITUNGEN AN EINE CHROMATOGRAPHIESÄULE
APPAREIL POUR COUPLER DEUX TUYAUX À UNE COLONNE CHROMATOGRAPHIQUE

(30) Priority: 29.10.2010 US 408039 P
(43) Date of publication of application: 08.02.2017
(62) Divisional of application: 11837141.8
(73) Proprietor: Thermo Finnigan LLC, San Jose, CA 95134 (US)
(72) Inventor: BRANN, John E., Shewsbury, MA 01545 (US); FRANCE, Eric A., Pawtucket, RI 02861 (US)
(74) Representative: Boult Wade Tennant LLP

(56) References cited:
- WO-A1-89/06766
- WO-A1-2010/102194
- GB-A- 2 379 487
- US-A1- 2007 001 451

## Description

### TECHNICAL FIELD

This invention generally relates to liquid chromatography, and more specifically to a mechanism and method for fluidically coupling a chromatographic column to fluid-carrying tubing within a liquid chromatograph system.

### BACKGROUND ART

Liquid chromatography (LC) is well-known in the fields of chemical separation, compound purification and chemical analysis. A central component of a liquid chromatography system is a chromatographic column. The column comprises a capillary tube that is packed with a permeable solid material that either is, itself, a chromatographic stationary phase or otherwise comprises or supports a chromatographic stationary phase. A fluid mixture comprising both a compound of interest for purification or separation as well as a chromatographic mobile phase is caused to flow through the column under pressure from an input end to an output end. Generally, the chemical properties of the stationary phase and the mobile phase are such that the degree of partitioning of the compound of interest between the mobile phase and the stationary phase is different from the degree of partitioning of other compounds within the fluid. As a result, the degree of retention or time of retention of the compound of interest within the column is different from the degree or time of retention of the other compounds, thus causing a physical separation of the compound of interest from the other compounds.

Although chromatograph columns may be re-used for multiple analytical or purification runs, any particular column ultimately needs to be removed from an LC system and replaced with a different one. For instance, physical or chemical degradation of a column packing material or stationary phase or build up of chemical contamination or particulate matter as a result of extended usage may render a column un-usable. As another example, a change in the type of analysis or separation, perhaps corresponding to a different compound of interest, may require replacement of an existing column with a different one whose stationary phase chemistry is better optimized for the new requirements. Especially in high-volume or high-throughput laboratory environments, it may be necessary to frequently connect and disconnect various chromatographic columns. In order to connect or disconnect a column to or from an LC system, it is necessary to make or break fluid couplings between both ends of the column and fluid-carrying tubing lines. Efficiency considerations dictate that such connecting and disconnecting of columns should be as simple and quick as possible and should be able to be performed with minimal system disruption caused by leaking fluid or breakage of components.

Currently, to attach a column to an LC system in a conventional fashion, a user must first properly assemble a compression fitting and ferrule onto the end of a fluid-carrying length of tubing. It is important that the tubing has been cleanly and squarely cut prior to assembly. The assembly must be inserted into a column end fitting while ensuring the assembly (tube, fitting and ferrule) does not fall apart. Then, while pressing the tubing into the column end fitting, the user must tighten the compression fitting into the column end fitting using two properly sized wrenches. The user must be careful not to under tighten the compression screw such that the assembly will be loose and not able to seal. The user must also be careful not to over tighten the compression screw because doing so presents a risk of the assembly galling, the compression screw breaking or the tubing collapsing.

Thereafter, once the first assembly has been properly fitted into the column end fitting, removing the column from the LC system requires the user to again use two wrenches to loosen and disconnect the tubing. Although this procedure may be repeated multiple times with a single assembly, ultimately the wear and material fatigue caused by multiple manual handlings requires replacement of the assembly (the column, tubing or fittings) to mitigate the consequent increased risk of galling, breakage or tube collapse.

Using the current column attachment process, the ferrule is used to both hold the tubing in the column end fitting and create a positive seal. Therefore enough force must be applied to the ferrule to ensure a friction/deformation fit with the tubing to hold the tubing in place. Typically, that force is much greater than necessary to ensure a positive seal between the tube, ferrule and column end fitting, dramatically shortening the number or times a particular assembly can be re-used.

UK Patent publication GB 2379487 describes a quarter turn quick connect fitting for connecting miniature fluid conduits. A first fitting has radial projecting pins and a second fitting located with a rotatable quarter turn nut has spiral grooves which receive the pins, the nut creating a locking engagement of the pins with a locking surface of the grooves. In an embodiment, the connect fitting uses a spring or stack of springs to bias a tube portion against a sealing element.

### DISCLOSURE OF INVENTION

In an aspect of the invention, there is provided a column-coupling apparatus for coupling a liquid chromatography column to a first tubing and to a second tubing, according to claim 1.

The present disclosure teaches a device and method for using it which facilitates the rapid connecting and disconnecting of a chromatograph column to fluid-carrying tubing lines of an LC in such a manner that does not negatively affect chromatography
performance and that ensures that resulting connections are capable of sealing at pressures exceeding those found in the LC system. The device is capable of first positioning a tube into the column end fitting such that the tube will be in contact with the column end fitting. Once contact is made the device then applies a spring force (a first force) to the tube which exceeds the opposing force that will be created when the column is at maximum operating pressure. Preferably, the first force should be just great enough to hold the tubing in place at a specified operating pressure. Next, the device ensures that a deformable sealing member (which may be a ferrule) comes in contact with the same column end fitting, encircling the tube. A separate independent spring force (a second force) is applied to the deformable sealing member or ferrule to ensure a proper fluid seal is made between the tube, the sealing member or ferrule and the column end fitting to prevent any leakage at the maximum operating pressure of the column. Preferably, the second force should be just great enough so as to create the proper fluid seal at the specified pressure. The positioning of the tube, sealing member or ferrule, and column end fitting and the spring forces for the tube and sealing member or ferrule are provided by a pushing and latching (or locking) mechanism, for instance a lever contained within the device which provides an appropriate amount of motion and mechanical advantage such that an operator does not require a tool.

In a first aspect of the present teachings, there is disclosed an apparatus for coupling a liquid chromatography column comprising an end fitting to a tubing is disclosed, the apparatus comprising: at least one body member comprising at least one chamber; a first spring within the at least one chamber, the first spring configured so as to apply a first force to the length of tubing towards the column end fitting; a second spring within the second chamber, the second spring configured to apply a second force to a deformable sealing member towards the column end fitting; a moveable support member affixed to the at least one body member; and a pushing and latching or locking mechanism configured to push the at least one body member, first and second springs and moveable support member towards the column end fitting.

In a second aspect of the present teachings, there is disclosed an apparatus for coupling a liquid chromatography column comprising an end fitting to a tubing, the apparatus comprising: a piston comprising at least one chamber; a first spring within the at least one chamber, the first spring configured so as to apply a first force to the length of tubing towards the column end fitting; a second spring within the at least one chamber, the second spring configured to apply a second force to a deformable sealing member towards the column end fitting; a pushing and latching mechanism configured to push the piston, the first spring and the second spring towards the column end fitting; and a housing comprising a supporting structure for the end fitting and having a bore or cavity within which a portion of the piston slidably moves during the pushing of the piston by the pushing and latching mechanism.

In a third aspect of the present teachings, there is disclosed an apparatus for coupling a liquid chromatography column comprising a first end having a first end fitting and a second end having a second end fitting to a first tubing and to a second tubing, the apparatus comprising: a base and a first and a second coupling apparatus affixed to the base, each coupling apparatus for coupling one of the first and second end fittings to one of the first and second tubings, each coupling apparatus comprising at least one body member comprising (a) at least one chamber, (b) a first spring within the at least one chamber, the first spring configured so as to apply a first force to the length of tubing towards the column end fitting; (c) a second spring within the at least one chamber, the second spring configured to apply a second force to a deformable sealing member towards the column end fitting; and (d) a pushing and latching mechanism configured to push the at least one body member, the first spring and the second spring towards the column.

In a fourth aspect of the present teachings, there is disclosed a method for coupling a tubing having a tubing end to a liquid chromatography column comprising the steps of: (a) passing a portion of the tubing, including the tubing end, through a coupling apparatus comprising: (i) at least one chamber; (ii) a first spring within the at least one chamber capable of transmitting a spring force to the tubing; (iii) a second spring within the at least one chamber; and (iv) a deformable sealing member capable of receiving a second force from the second spring; (b) inserting the tubing end into a hollow receptacle of an end fitting of the liquid chromatography column; (c) moving the coupling apparatus towards the chromatography column such that the first spring urges the tubing into the receptacle such that a pressure of the tubing end against the end fitting exceeds a maximum operating fluid pressure of the chromatography column; and (d) further moving the coupling apparatus towards the chromatography column such that the second spring causes the deformable sealing member to form a fluid seal between the column and the receptacle.

### BRIEF DESCRIPTION OF DRAWINGS

The above noted and various other aspects of the present invention will become apparent from the following description which is given by way of example only and with reference to the accompanying drawings, not necessarily drawn to scale, in which:
FIG. 1 is a schematic illustration of a generalized conventional liquid chromatography - mass (LCMS) spectrometry system;
FIG. 2 is a schematic illustration of a liquid chromatography column having conventional couplings to an input tubing and an output tubing;
FIG. 3A is an illustration of an apparatus for coupling a tubing to an end of a chromatographic column in accordance with the present teachings;
FIG. 3B is a perspective view of the column securing mechanism portion of FIG. 3A.
FIG. 4A is an illustration of a portion of a second apparatus for coupling a tubing to an end of a chromatographic column in accordance with the present teachings;
FIG. 4B is an illustration of a portion of a third apparatus for coupling a tubing to an end of a chromatographic column in accordance with the present teachings;
FIG. 5 is an illustration of a system for coupling an input tubing and an output tubing to respective ends of a chromatographic column in accordance with the present teachings;
FIG. 6A is a first perspective view of a fourth apparatus for coupling a tubing to an end of a chromatographic column in accordance with the present teachings;
FIG. 6B is a second perspective view of the apparatus illustrated in FIG. 6A;
FIG. 6C is a cross sectional view taken through the center of and along the main axis of the apparatus illustrated in FIGS. 6A, 6B;
FIG. 6D is a perspective view of a fluid tubing which may be employed in the apparatus of FIGS. 6A, 6B; and
FIG. 7 is a flow diagram of a method for coupling a piece of tubing to a chromatography column in accordance with the present teachings.

### MODES FOR CARRYING OUT THE INVENTION

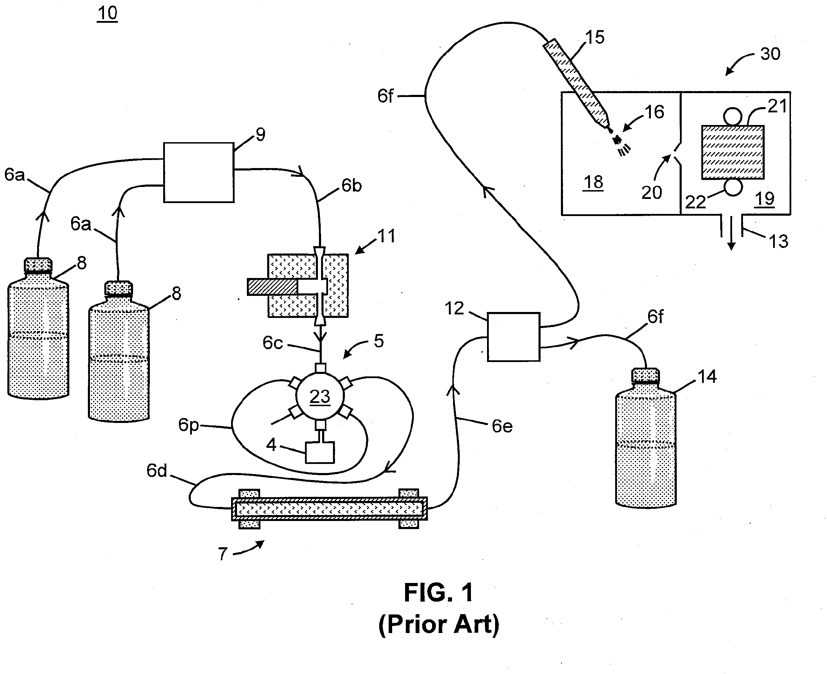

The following description is presented to enable any person skilled in the art to make and use the invention, and is provided in the context of a particular application and its requirements. Various modifications to the described embodiments will be readily apparent to those skilled in the art and the generic principles herein may be applied to other embodiments. Thus, the present invention is not intended to be limited to the embodiments and examples shown but is to be accorded the widest possible scope in accordance with the features and principles shown and described. To fully appreciate the features of the present invention in greater detail, please refer to FIGS. 1-6 in conjunction with the following discussion.

FIG. 1 is a schematic illustration of a conventional liquid chromatography - mass spectrometry (LCMS) system. The system **10** shown in FIG. 1 comprises a chromatograph column **7** for separating a liquid chemical mixture into its constituent substances and a mass spectrometer **30** fluidically coupled to the column **7** for detecting or identifying the separated constituent substances as they are received, in sequence from the column **7**. Although a mass spectrometer is illustrated for exemplary purposes, the mass spectrometer portion **30** may be replaced, depending on the needs of a user, by an alternative chemical analytical device for purposes of detecting or identifying the separated constituents. For instance, an infrared transmission or fluorescence detector may be employed for this purpose. Other detection devices are known.

The column **7** shown in FIG. 1 receives a fluid stream comprising one or more selected solvent fluids supplied from solvent containers **8** as well as a sample of interest from sample injector **4**. The various different solvent fluids, which may comprise a chromatographic mobile phase, are delivered along fluid tubing lines **6a** to valve **9** which may mix the fluids or select a particular fluid. As illustrated, the valve **9** is a three-way valve but may comprise a more complex valve or valve system if more than two different solvent fluids are provided. The fluids are drawn into the system **10** and propelled to the chromatographic column **7** therein by means of a pump **11** that is fluidically coupled to the output of the valve **9** by fluid tubing line **6b**. The solvent fluids output from the pump along fluid tubing line **6c** are mixed together with a sample provided by sample injector **4** by a mixing apparatus **5**, which may comprise, in a well-known fashion, a multiple-port rotary valve **23** and an injection loop **6p** fluidically coupled between two of the ports.

Still referring to FIG. 1, it may be observed that an input of the column **7** is fluidically coupled to and receives a mixture of sample and solvent fluids from an output port of the mixing apparatus **5** by fluid tubing line **6d**. Differential partitioning of the various chemical constituents of the mixture between the mobile phase and a stationary phase packed within the column leads to differential retention of the various constituents within the column and consequent different respective times of elution of the constituents from the column output to fluid tubing line **6e**. An optional split valve **12** may separate the eluting substances, along fluid tubing lines **6f**, into a split portion that is delivered to waste or storage container **14** and an analysis portion that is delivered the mass spectrometer **30**. The mass spectrometer may comprise various well-known components, such as an atmospheric pressure ionization source **15** that delivers a stream of charged particles **16** including ionized constituents into an ionization chamber **18**. The resulting charged particles are received, through an aperture **20**, into one or more evacuated chambers **19**, at least one of which contains a mass analyzer **21** for separating ions according to their respective mass-to-charge ratios and one or more detectors **22** for detecting the separated ions.

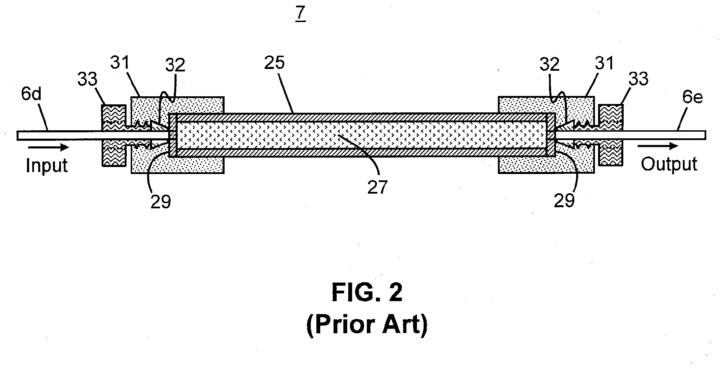

FIG. 2 is a schematic illustration of a conventional liquid chromatography column and its associated couplings to fluid tubing lines. The column **7** receives a fluid mixture at an input end from fluid tubing line **6d**, separates the mixture into its constituents and outputs the separated constituents, at respective elution times, from an output end to fluid tubing line **6e**. The column comprises a hollow capillary tube **25**, the interior of which is packed with a porous material **27**, such as a size-sorted granular material, which comprises the stationary phase. End caps **29** on either end of the capillary tube **25** serve to retain the porous material within the capillary tube **25** and to maintain an operating pressure within the tube. The column is provided with end fittings **31** at either end, each of which forms a portion of a compression fitting for sealing a fluid tubing line (**6d**, **6e**) against an end cap. In some implementations or designs, the column end cap may not comprise a separate component but may, instead, be integral with the end fitting or else the end fitting may provide the functions of an end cap. In this document, the term "end fitting" is used in a broad sense so as to include separate end caps, fittings with integral end caps or separate end fittings and end caps used pair-wise in conjunction with one another. The compression seal is completed, at each end of the column, by a ferrule **32** which may be tightly compressed into a bore of the associated fitting **31** by a threaded nut or screw **33** so as to deform in a fashion that creates a leak-tight seal between the ferrule, fluid tubing line and end fitting.

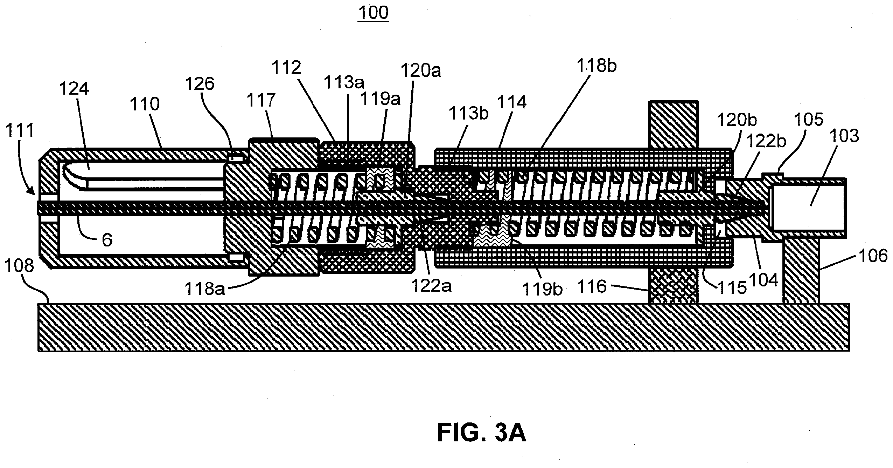

FIG. 3A is an illustration of an apparatus **100** for coupling a tubing to an end of a chromatographic column in accordance with the present teachings. In operation, a tubing **6** passes completely through the apparatus **100** substantially parallel to an axis of the apparatus through various apertures **111** of the apparatus. The apparatus **100** is operable so as to apply a force to the tubing **6** so that the tubing is pressed into the end fitting **104** so as to form a fluid coupling with the column **103**. The apparatus **100** is further operable so as to apply a second force to a sealing member **122b** (which may be a ferrule) so as to deform the sealing member in a fashion that creates a leak-tight seal between the tubing **6**, end fitting **104** and column **103**. Both such forces are applied substantially parallel to the common axis of the apparatus **100** and the column **103**, thereby preventing application of any twisting motions or forces to the column.

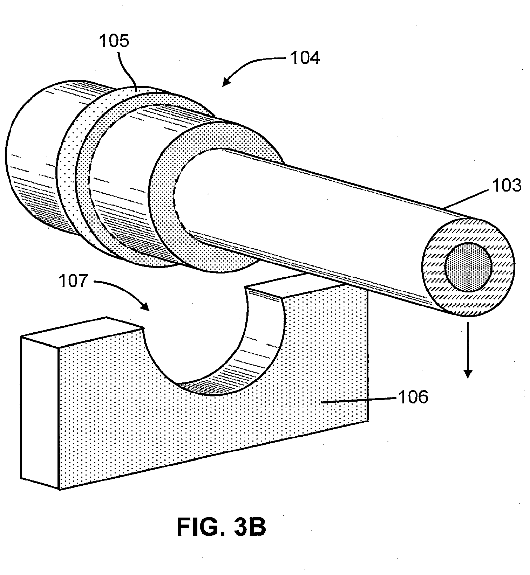

The coupling apparatus **100** shown in FIG. 3A comprises a hollow distal (or outer) body member **110**, a hollow intermediate body member **112** and a hollow proximal (or inner) body member **114** where the terms "distal" and "proximal" refer to spatial relationships taken with respect to a chromatograph column **103** having a column end fitting **104**. The distal body member **110** is attached to the intermediate body member **112** by a first threaded coupling **113a** and the intermediate body member **112** is attached to the proximal body member **114** by a second threaded coupling **113b**. The assembled body members are supported, as a group, on a base or housing **108** by a support member **116** which is either affixed to or rigidly clamped onto the proximal body member **114**. The column **103** is supported by a column support member **106** which fits at least partially around the column end fitting **104** as shown in FIG. 3B.

The support member **116** of the apparatus **100** (FIG. 3A) is engaged to the base or housing **108** so as to be moveable, in substantially one direction only, with respect to the housing. Such slidable engagement may be implemented, for instance, by the use of a rail (not shown). Such a rail could be rigidly attached to the support member and designed so as to slide within a matching groove (not shown) in the base or housing. One of ordinary skill in the mechanical arts could readily devise other slidable engagement configurations and couplings.

In contrast to the slidable nature of the coupling between the support member **116** and the base or housing **108**, the column support member **106** is rigidly fixed in place with respect to the base or housing **108**. As shown in FIG. 3B, the column support member **106** comprises a salient or re-entrant portion **107** which is designed to mate with and partially enclose a portion of the column end fitting **104**. Either the column end fitting or the column support may be constructed of a slightly pliable material such that the end fitting **104**, together with the column **103**, "snaps" into a defined and reproducible position within the salient **107** when the column is moved, under force, in the direction of the downward pointing arrow of FIG. 3B. A stopping mechanism of the column end fitting **104**, such as circumferential ridge **105**, prevents movement of the end fitting and column when force is applied to the free end of the column by the apparatus **100** during the operation of coupling a tubing **6** to the column. Although the stopping mechanism is illustrated as a circumferential ridge **105** in FIG. 3B, it could alternatively be implemented as a different form of protrusion, such as a boss, knob or pin. The combination of the slidable coupling between the support member **116** and the base or housing **108** and the fixed coupling between the column support member **106** and the base or housing permits the apparatus **100** (comprising the assembly of three body members **110**, **112**, **114** and associated components further discussed following) to be moved towards or retracted from the column **103** and its associated column fitting **104** by movement parallel to an axis of the apparatus **100**. Optionally, the slidable coupling may be provided with a latching or locking mechanism to prevent movement when a desired position is achieved.

Returning now to the discussion of FIG. 3A, it may readily be observed that the apparatus **100** further comprises two springs assembled within the apparatus so as to provide separate spring forces parallel to an axis of the apparatus. A first spring **118a** is disposed within a first chamber of the apparatus defined between the intermediate body member **112** and an end cap **117** of the distal body member **110**. A second spring **118b** is disposed within a second chamber of the apparatus defined between the intermediate body member **112** and the proximal body member **114**. The first spring **118a** is held against a first bushing or washer **120a** by a first spring retainer **119a**. Likewise, the second spring **118b** is held against a second bushing or washer **120b** by a second spring retainer **119b**. During assembly, the first spring **118a** is pre-loaded with a first pre-determined compressive force, by progressive engagement of the first threaded coupling **113a**, so as to compress the first spring between the end cap **117** and the first bushing or washer **120a**. Note that the first bushing or washer **120a** is held in place against an interior wall of the intermediate body member **112** during this operation. Likewise, during assembly, the second spring **118b** is pre-loaded with a second pre-determined compressive force, greater than the first pre-determined compressive force, by progressive engagement of the second threaded coupling **113b,** so as to compress the second spring between the intermediate body member **114** and the second bushing or washer **120b.** Note that the second bushing or washer **120b** is held in place against an interior wall of the proximal body member **114** during this operation.

Prior to assembly of the distal body member **110** onto the intermediate body member **114**, a ferrule **122a** is placed into a hollow interior portion of the intermediate body member. The purpose of the ferrule **122a** is to transfer force provided by the first spring **118a** through the bushing or washer **120a** to a tubing **6** such that the tubing is pressed into the column end fitting **104** with sufficient force so that the pressure between the tubing and the end fitting exceeds the fluid pressure - typically 15000 psi for HPLC systems - achieved in the column under normal operating conditions. Since the body of the tubing is generally constructed of metal, the ferrule **122a** is preferably constructed of a metal - for instance, stainless steel - having a hardness that is equivalent to or greater than that of the tubing. With such choice of material, force applied to the ferrule **122a** in the direction of the column **103** will tend to cause the ferrule **122a** to wedge itself into the tubing wall so as create a tight metal-to-metal friction seal. In alternative embodiments, the ferrule **122a** may be replaced by a shape on or integral with the tubing **6**, such as a ridge, groove, ring, etc. In operation, the formed shape portion of the tubing may engage with a clamp, ring, washer, bushing etc. in contact with the first spring **118a** in order to transfer spring force to the tubing **6**.

In operation, the apparatus **100** also comprises a deformable sealing member **122b,** which may be a second ferrule, which is placed on the tubing **6** just prior to positioning the tubing end into the column end fitting **104**. The purpose of the deformable sealing member **122b** is to deform, under application of force provided by the second spring **118b** through the bushing or washer **120b** so as to form a leak-tight seal between the tubing, end fitting and column. Accordingly, the deformable sealing member **122b** is preferably constructed of an elastic polymer material such as polyether ether ketone (PEEK).

When the apparatus **100** is not in operation providing coupling between a tubing and a column, the pre-loaded spring forces are respectively taken up between the end cap **117** of the distal body member **110** and the intermediate body member **112** and between the intermediate body member and the proximal body member **114**. A user may place the apparatus **100** in operation (with the tubing **6** and the ferrule **122a** already in place within the apparatus and the deformable sealing member **122b** already in place on the tubing) by operating a mechanism **124** (comprising both a pushing mechanism and a locking or latching mechanism) which pushes the three body members (and, consequently, also the support member **116,** the tubing **6** and the hardware within the body members) in the direction of the fixed column **103** and its end fitting **104.**

Once the tubing comes into contact with the end fitting, further application of force (by continued operation of the pushing and latching mechanism) causes the tubing to apply an increasing force against the first spring **118a** through the ferrule **122a** and the first bushing or washer **120a.** Once the opposing force provided by the tubing exceeds the pre-loaded spring force on spring **118a**, continued operation of the pushing and latching mechanism will cause the spring to compress, thereby enabling movement of the apparatus such the deformable sealing member **122b** comes into contact with both the proximal body member **114** and the column end fitting **104**. Further operation of the pushing and latching mechanism causes both compression of the first spring **118a** as well as application of an increasing opposing against the second spring **118b** through the deformable sealing member **122b** and the second bushing or washer **120b**. Still further operation of the pushing and latching mechanism causes both springs **118a**, **118b** to compress with consequent increase in spring force applied to the tubing and to the deformable sealing member. The increasing force and pressure on the deformable sealing member **122b** causes this component to deform within the column end fitting **104** and around the tubing so as to create a leak-tight pressure seal.

A recess **115** in the end of the proximal body member **114** may be provided so as to provide a gap for accommodation of the deformable sealing member **122b** and to guide the relative movement between the coupling apparatus **100** and the column end fitting **104** during the pushing and latching procedure. The pre-compression of the springs prior to actual operation of the apparatus ensures that minimal actual movement of parts is required to achieve the required or appropriate final forces on the tubing and on the deformable sealing member or second ferrule.

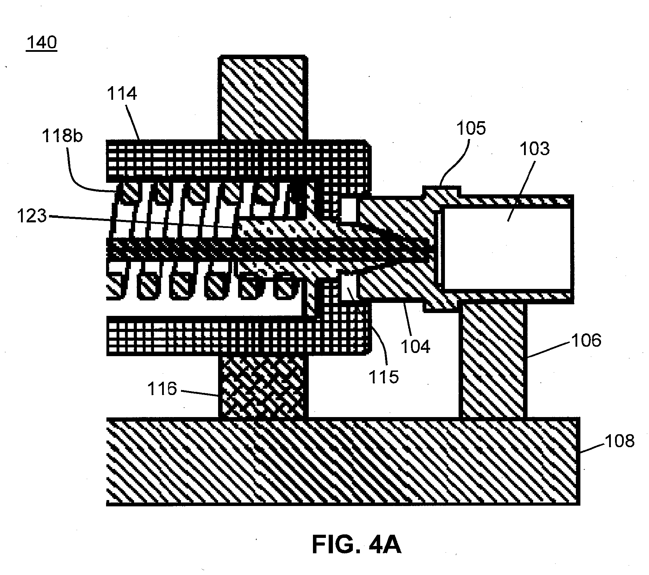

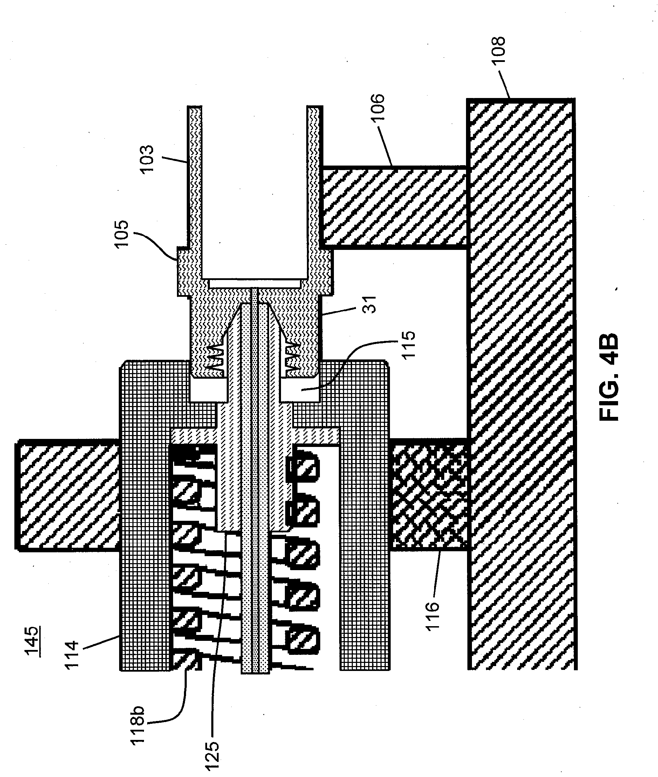

FIGS. 4A-4B are illustrations of end portions of two alternative apparatuses for coupling a tubing to an end of a chromatographic column in accordance with the present teachings. The apparatuses **140**, **145** shown in FIGS. 4A, 4B are similar, in most respects, to the apparatus **100** illustrated in FIG. 3A. However the apparatuses **140**, **145** differ from the apparatus **100** in regards to the manner in which the tubing **6** is sealed to an end fitting **104, 31** and to the column **103**. Whereas, in the apparatus **100**, the deformable sealing member **122b** may simply comprise a second ferrule, in the apparatus **140** shown in FIG. 4A, a single integral, single-bodied sealing member **123** replaces both the second bushing or washer **120b** and the sealing member **122b**. The sealing member **123** comprises a deformable material so as to create a leak-tight seal between the tubing **6**, the end fitting **104** and the column **103** under force from the second spring **118b**. In the apparatus **140** shown in FIG. 4A, another integral, single-bodied sealing member **125** is employed for such sealing purposes.

The sealing member **125** of the alternative apparatus **145** (FIG. 4B) is a modified version of the sealing member shown in FIG. 4A in which a portion extending outward from the proximal body member **114** is elongated, such that the tubing **6** can be sealingly coupled to a conventional column end fitting **31** using the novel coupling apparatus **145**. Recall from FIG. 2 that a portion of many conventional end fittings, such as the conventional end-fitting **31**, has a bore with an internal screw thread. This internal screw thread is designed to mate with external threads of a threaded nut or screw **33** that may be rotated so as to provide a compression force. Although such screw threads are not employed in the illustrated novel embodiments disclosed herein, it is nonetheless desirable to be able to employ the invention in conjunction with existing chromatographic columns having conventional fittings. Accordingly, the sealing member **125** has an elongated portion that has a diameter smaller than the internal diameter of the threaded portion of the end fitting **31**. In this way, the sealing member **125** is adapted so as to extend into the conventional column end fitting without contacting the threads, thereby bypassing the threaded portion. Inward of the threads, the deformable sealing member **125** engages, in operation, with a tapered portion of the bore of the conventional end-fitting, thereby forming a leak-tight seal in a manner similar to the way in which the deformable sealing member or second ferrule **122b** creates a seal against the un-threaded end fitting **104** (FIG. 3A). Upon disconnection of a tubing from a chromatographic column using either apparatus **140** or apparatus **145**, the sealing member (either sealing member **123** or sealing member **125**) may remain either attached to or within the proximal body member **114**, thereby eliminating the requirement for a user to supply or insert a ferrule at the next use of the respective apparatus.

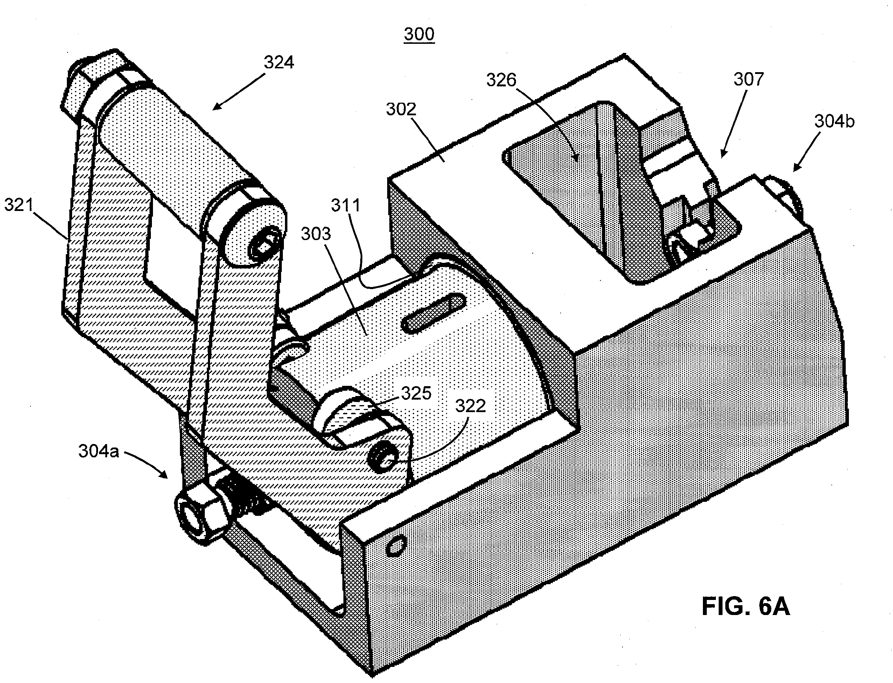

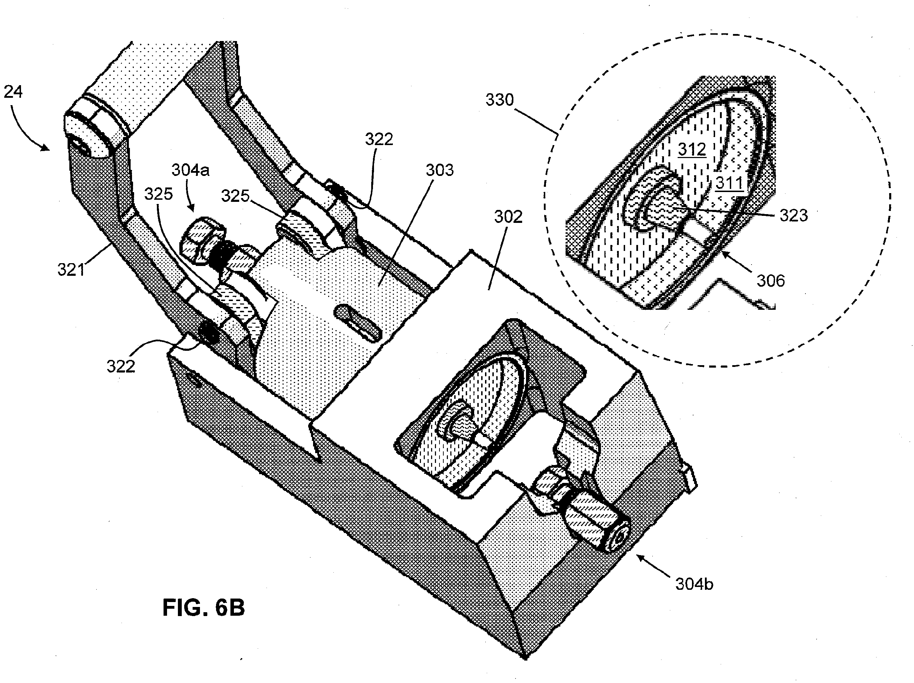

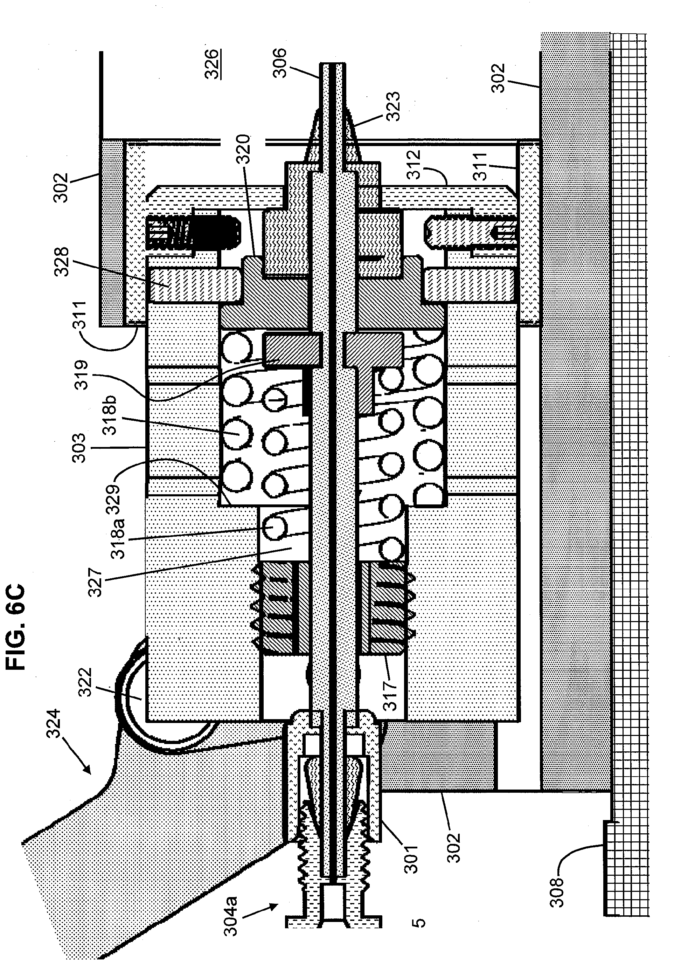

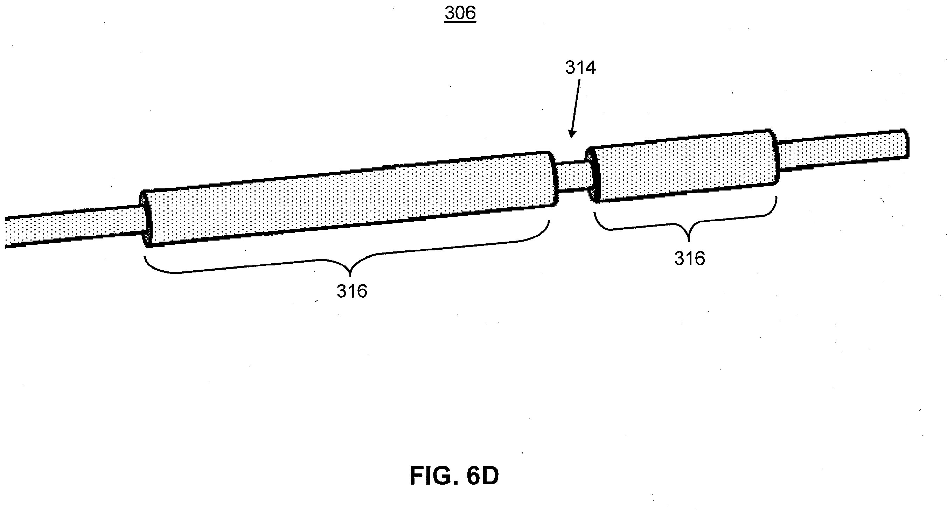

The coupling apparatuses described above each employ two springs which are deployed in a non-overlapping end-to-end spatial relationship as considered along the main axis of the respective apparatus. However, space along the axial dimension may be saved, if desired, by providing a modified coupling apparatus design in which the springs at least partially overlap along the axial dimension as, for example, when one spring resides at least partially within a space enclosed by the other spring. An example of one such coupling apparatus is shown in FIG. 6.

Referring in detail now to the coupling apparatus **300**, FIGS. 6A and 6C are first and second perspective external views of the fully assembled apparatus **300**. Considered generally, the apparatus **300** comprises a housing **302** that is a first body member of the apparatus and a piston **303** that is a second body member of the apparatus. The housing **302** has an open bore or cavity **326**. The piston **303** is capable of being slidably inserted at least partially into the bore or cavity **326** of the housing and is also capable of being at least partially retracted from the bore or cavity. Preferably, a portion of bore or cavity **326** comprises a shape that mates with the portion of the piston which is capable of being slidably inserted into the bore or cavity. If this portion of the piston is cylindrical, then the piston and bore may be said to comprise a piston-cylinder relationship.

A bushing or other bearing **311** may be provided within the portion of the bore or cavity **326** that receives the portion of the piston **303** so as to provide a smooth sliding surface for insertion and retraction of the piston. The movement of the piston into or partial retraction of the piston from the housing may be controlled manually by a user by means of a pushing and latching (or locking) mechanism **324**. As shown the pushing and latching mechanism may comprise a hand operated lever **321** and a coupling bar **325** such that the coupling bar **325** is mechanically engaged to the lever **321** by means of a first pivot pin **322** about which an end of the coupling bar is free to rotate. A second pivot pin (not shown) similarly provides mechanical engagement between the opposite end of the coupling bar **325** and the piston **303** so that rotational motion of the lever **321** is converted into translational motion of the piston.

The piston **303** has a chamber **327** therein through which a length of tubing **306** passes. The inset drawing **330** of FIG. 3B shows a portion of the apparatus **300** in magnified view so that an end portion of the tubing **306** may be seen protruding beyond an end plate **312** of the piston **303**. A sealing member **323**, which is a part of the apparatus and which may be a deformable ferrule, encloses a portion of the tubing **306** such that the end portion of the tubing protudes partially beyond the sealing member **323**. The sealing member **323** has a conical outer surface which is designed to mate with a conical inner surface of a conventional end fitting **304b** (which is not necessarily a component of the apparatus **300** but which is shown for clarity) so as to provide a leak-tight seal within the end fitting **304b**. In operation, the end-fitting **304b** will generally be mounted on an end of a chromatograph column (not shown) which will be either an inlet end or an outlet end of the column. Accordingly, with the tubing **306** and sealing member **323** inserted into the end fitting **304b** by means of the coupling apparatus **300**, the tubing **306** will either deliver fluid into or receive fluid from the chromatograph column.

In the views shown in FIGS. 6A, 6B, the coupling apparatus is shown in an open position, such that the end of the tubing **306** is retracted from the end fitting **304b**. In this open configuration, the chromatograph column may be removed or replaced. The same or a different chromatograph column may then be positioned in the correct placement so as to receive the end of the tubing **306** by positioning its end fitting into a slot, recess or groove **307** (FIG. 6A) of the housing **302**. Thus, a portion of the housing comprising the slot, recess or groove **307** provides the same functionality as the column support member **106** discussed previously herein in conjunction with other embodiments. Subsequently, the pushing and latching mechanism **324** is operated so as to cause the piston **303** to move further into the bore or cavity **326** with the tubing **306** being carried along with such motion until the tubing end engages with the end fitting **304b**. Further operation of the lever in the same direction causes a leak-tight seal to be formed between the tubing and the end fitting in a manner described below.

FIG. 6C is a cross-sectional view through the center of the piston **303** of the apparatus **300** and also through the center of the tubing **306** that illustrates internal components within the chamber **327** of the piston. FIG. 6C also illustrates that the housing **302** may be affixed to a base plate or external housing **308**, so as to provide positional stabilization of the apparatus **300** as previously discussed in regard to other embodiments. The components within the chamber **327** enable the apparatus **300** to provide a leak-tight seal between the tubing **306** and the chromatograph column end fitting **304b**, even under high pressures encountered in HPLC applications, without the need for a user to employ a tool or to apply any twisting motion or torque to either the tubing or the column.

As may be observed from FIG. 6C, the piston chamber **327** has disposed within it a first helically coiled spring **318a** and a second helically coiled spring **318b** that has an internal diameter that is greater than the external diameter of the first spring. The springs are disposed such that they are at least partially overlapping - that is, such that at least a portion of the first spring **318a** resides within a volume or space defined by the internal diameter of the second spring **318b**. The tubing **306** passes substantially parallel to and along the common axis of the two springs **318a**, **318b**. In operation, the first helically coiled spring **318a** (FIG. 6C) transmits a first spring force to the tubing **306** by means of a collar, sleeve or flange **319** that abuts an end of the first spring. The collar, sleeve or flange **319** is either affixed to or tightly engaged with the tubing **306** so as to apply a force to the tubing in a direction substantially parallel to its axis and towards the end fitting **304b**. A screw **317** which is threaded into a portion of the piston chamber **327** abuts the other end of the first spring and may be pre-adjusted so as to provide a desired pre-loaded compressional force to the spring. The second helically coiled spring **318b** transmits a second spring force to the sealing member **323** by means of an intermediate push plate **320**, such as a bushing or a flange. The second spring **318b** is restrained within the piston chamber **327** by push plate **320** at the end nearest to the end fitting **304b** and by an internal wall **329** of the chamber at the other end. The push plate **320** is restrained within the chamber **327**, against the spring forces, by a mechanical stop or stops **328** which are engaged to a piston wall or walls and which may comprise, for example, a set of pins passing through holes in the piston wall, a locking ring or flange secured by an internal groove in an interior piston wall or any other boss or knob engaged to or affixed to the piston. The mechanical stop or stops prevent the springs from pushing themselves and/or other components out of the chamber **327** when the pushing and latching mechanism is in the open position such that the tubing **306** is retracted from the end fitting **304b**.

FIG. 6D is a perspective view of the isolated tubing **306**. In this exemplary embodiment, the tubing **306** is a specially designed tubing which is designed so as to engage with the collar, sleeve or flange **319** so as to be thus mechanically coupled to the first helically coiled spring **318a**. As shown, the tubing comprises one or more enlarged-outer-diameter portions **316** between which is defined a groove **314** which, in operation, engages with a portion of the collar collar, sleeve or flange **319**. The end portions of the tubing **306** preferably comprise a standard outer diameter so as to be operable conventional end fittings or tubing connection fittings. One of ordinary skill in the art will appreciate that, alternatively, the groove **314** may be eliminated in favor of a flange or ring affixed to a tubing of standard diameter throughout. In this alternative case, the affixed flange or ring is the component **319**.

In routine operation of this exemplary apparatus embodiment, the tubing **306** will remain with the apparatus **300** throughout the course of several engagement and disengagement operations of the apparatus wherein such operations are associated with, for example, several removal and replacement operations of one or more chromatograph columns. At the end of the tubing opposite to the cartridge, the tubing **306** may be connected to a length of conventional chromatography tubing (not shown) by means of a conventional tubing connection fitting **304a** comprising a coupling nut **301**, a tubular coupling body **305** and a ferrule **309**. The circumstances under which the conventional tubing (or the tubing **306**) must be replaced will ordinarily be less frequent than the situations under which a column is removed, added or replaced. At those times when the conventional tubing or tubing **306** must be replaced, the connection and disconnection of the tubing lengths may be accomplished, in standard fashion, by disconnecting the tubing connection fitting **304a**. Under no circumstances, however, is there any requirement to use an installation tool or to apply a twisting motion or a torque to the chromatograph column or its end fitting using the disclosed apparatus.

In operation of the coupling apparatus **300**, after the protruding end of the tubing **306** makes contact with the end fitting **304b**, further movement of the hand lever **321** in the same direction does not cause further movement of the tubing with respect to the end fitting **304b** or the housing because of the positionally fixed nature of the tubing with respect to the housing. Instead, continued movement of the hand lever and piston causes additional compression of the first spring **318a** such that spring force from the first spring is applied to the tubing **306** in a direction towards the end fitting. Because of the pre-loaded compression previously applied to the first spring, the pressure between the tubing and the end fitting increases rapidly from zero to some final pressure concurrent with movement of the hand lever **321** into its final latched position. The final pressure between the tubing and the end fitting is such as to exceed the fluid pressure - typically 15000 psi for HPLC systems - achieved in the column under normal operating conditions. At the same time, or possibly commencing slightly after the tubing **306** makes contact with the end fitting **304b**, movement of the piston internal wall **329** against the second spring **318b** causes increasing spring force to be applied to the sealing member **323** through the push plate **320**, so as to deform, under application of force provided by the second spring **318b**, so as to form a leak-tight seal between the tubing, end fitting and column. Accordingly, the deformable sealing member **323** is preferably constructed of an elastic polymer material such as polyether ether ketone (PEEK).

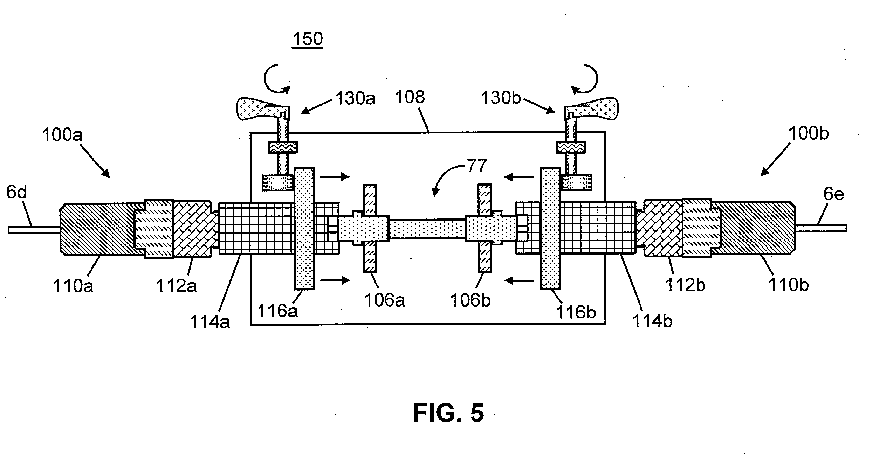

Frequently, it is desirable or required to perform coupling operations at both ends of a chromatograph column. For instance, when a column is replaced, couplings at both ends of the replaced column must be disconnected and couplings formed at both ends of the replacement column. Accordingly, FIG. 5 illustrates a system for coupling an input tubing and an output tubing to respective ends of a chromatographic column in accordance with the present teachings. The specific system **150** shown in FIG. 5 may be utilized with any of the coupling apparatuses **100** (FIG. 3A), **140** (FIG. 4A) or 145 (FIG. 4B) or with similar coupling apparatuses. The system **150** comprises a single base or housing **108** that supports both a first coupling apparatus **100a** and a second coupling apparatus **100b** at opposite ends of a chromatograph column **77** by means of a first slidable support member **116a** and a second slidable support member **116b**, respectively. The column is supported in a fixed position relative to the base or housing **108** by column support members **106a** and **106b** at the input end and output end, respectively, of the column **77**. The slidable support members (**116a**, **116b**), column supports (**106a**, **106b**) and coupling apparatuses (**100a**, **100b**) are similar to the analogous components previously described with respect to FIGS. 3A-3B. Thus, the coupling apparatus **100a**, which comprises distal body member **110a**, intermediate body member **112a** and proximal body member **116a**, serves to couple an input tubing **6d** to the input end of the column **77**. Likewise, the coupling apparatus **100b**, which comprises distal body member **110b**, intermediate body member **112b** and proximal body member **116b,** serves to couple an output tubing **6e** to the output end of the column **77**. A first pushing and latching or locking mechanism **130a** and a second pushing and latching or locking mechanism **130b** are each operable by a user so as to provide the compressional motions described previously.

It is straightforward and easy to construct a system that provides the functionality shown in FIG. 5 using two coupling apparatuses **300** as shown in FIGS. 6A-6C or using similar apparatuses. Because each coupling apparatus **300** provides a built-in support structure for a column end fitting as well as a slidable piston, the slidable support members **(116a, 116b)** and column supports **(106a, 106b)** shown in FIG. 5 are rendered un-necessary. All that is required is to attach two instances of the apparatus **300** facing one another on a base plate or on or within an external housing **308** (see FIG. 6C) at an appropriate distance from one another such that the two end fittings of a chromatography column fit easily into the slots recesses or grooves of the two coupling apparatuses. To accommodate columns of different lengths, it may be desirable to attach at least one of the coupling apparatuses to the base plate or housing in a slidable or otherwise adjustable fashion such that the distance between the two coupling apparatuses may be adjusted.

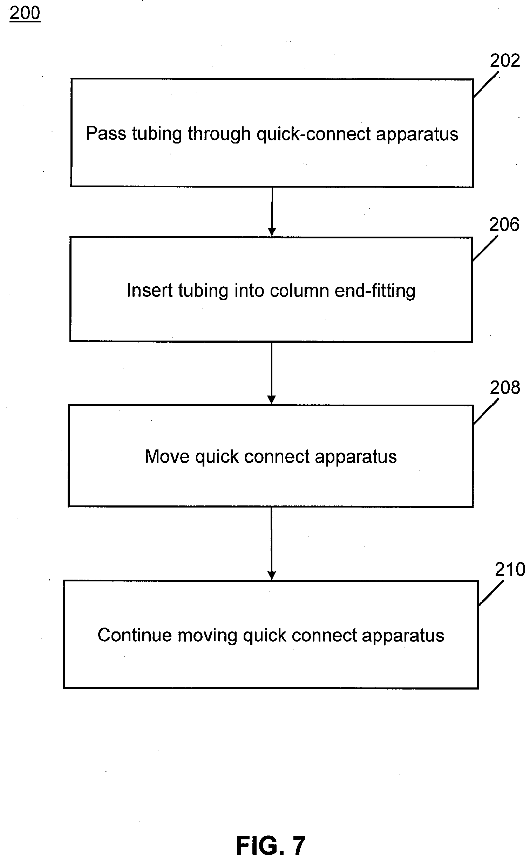

FIG. 7 is a flow diagram of a method, method **200,** for coupling tubing to a chromatography column in accordance with the present teachings. The method **200** is especially pertinent for use in conjunction with any of the coupling apparatuses **100** (FIG. 3A), **140** (FIG. 4A) or 145 (FIG. 4B) or with similar coupling apparatuses. The first step, Step **202**, of the method **200** comprises passing a portion of a piece of chromatography tubing, including a tubing end, through a coupling apparatus comprising: a deformable sealing member and at least one chamber having a first spring and a second spring wherein the first spring is capable of transmitting a spring force from the first spring to the chromatography tubing and wherein the deformable sealing member is capable of receiving a force from the second spring. The act of passing the portion of the piece of chromatography tubing through the apparatus may be eliminated if the tubing and apparatus have already been used in a previous connection procedure. In such a case, this step becomes a step of merely providing the described apparatus with the tubing passing through it.

In the next step, Step **206,** the tubing end is inserted into a hollow receptacle of the chromatography column end fitting. Then, in Step **208,** the coupling apparatus is moved towards the chromatography column such that the first urges the tubing into the receptacle with a force that creates a pressure of the tubing end against the end fitting that exceeds the fluid pressure that will be created when the column is at its maximum operating pressure. In Step **210,** the movement of the quick connect apparatus towards the chromatographic column is continued such that the second spring causes the deformable sealing member to form a fluid seal between the column and the receptacle so as to prevent any leakage at the maximum operating pressure.

After a column has been connected to chromatography tubing as described and utilized in the coupled configuration, the disconnect operation is trivial - the user simply operates the pushing and latching mechanism in the opposite direction from the direction used to connect the column and tubing. The disconnect operation may be as simple as simply pushing a lever in a reverse direction so as to release the applied forces and disengage the apparatus and tubing from the column end fitting. One of ordinary skill in the mechanical arts will readily understand how to provide a pushing and latching mechanism that performs this reverse operation.

Improved apparatus and methods for coupling tubing to a chromatographic column have been disclosed. Using the disclosed apparatus, a user may simply place a column and a portion of tubing including a tubing end into the device and operate a pushing mechanism, such as a lever. As previously described, the positioning of the tube and column end fitting, as well as the application of the appropriate forces is assured by the device. As the holding force on the tube is separate from the sealing force on the sealing member, which may be a ferrule, each force can be set only as necessary, enabling reuse of the tube and ferrule many times more as compared to typical combination of tube and ferrule. The apparatus eliminates the need for twisting motions applied to either the column or tubing, provides highly reproducible connecting and disconnecting operations and provides an appropriate amount of motion and mechanical advantage such that an operator does not require a tool, either for connecting a column to or disconnecting a column from tubing.

## Claims

1. A column-coupling apparatus for coupling a liquid chromatography column (103) comprising a first end having a first column end fitting and a second end having a second column end fitting to a first tubing and to a second tubing, the apparatus comprising:
a base or housing (108, 308);
a first and a second tubing coupling apparatus affixed to the base or housing (108, 308), each tubing coupling apparatus for coupling one of the first and second column end fittings to one of the first and second tubings, each tubing coupling apparatus comprising:
at least one body member (112, 114, 303) comprising at least one chamber;
a first spring (118a, 318a) within the at least one chamber, the first spring configured so as to apply a first force to the respective tubing (6, 306) in a longitudinal direction of the respective tubing and towards the respective column end fitting (104, 304b), wherein the first force is transmitted from the first spring (118a, 318a) to the respective tubing (6, 306) either by means of a first bushing or washer (120a) and a ferrule (122a), or by means of a collar, sleeve or flange (319) that is affixed to or tightly engaged with the respective tube (6, 306);
a second spring (118b, 318b) within the at least one chamber, the second spring configured to apply a second force to a deformable sealing member (122b, 123, 125, 323) in a direction parallel to the longitudinal direction of the respective tubing (306) and towards the respective column end fitting (304b), wherein the second force is transmitted from the second spring (118b, 318b) to the deformable sealing member (323) either directly, by means of a second bushing or washer (120b) or by means of a push plate (320); and
a pushing and latching mechanism (124, 324) configured to push the at least one body member (112), the first spring (118a, 318a) and the second spring (118b, 318b) towards the column (103) in a direction parallel to the longitudinal direction of the respective tubing and in the absence of application of any twisting motion or torque to either of the respective column end fitting (104, 304b) or the respective tubing (6, 306).

2. The column-coupling apparatus as recited in claim 1, wherein the at least one body member of each tubing coupling apparatus is an intermediate body member (112) comprising an intermediate body member first end and an intermediate body member second end, the at least one of the first (100a) and second (100b) tubing coupling apparatuses further comprising:
a proximal body member (114) having a first end configured to mate with the column end fitting (104) and a second end configured to attach to the intermediate body member (112) first end; and
a distal body member (110) attached to the intermediate body member (112) second end,
wherein the at least one chamber comprises a first chamber and a second chamber, the first chamber containing the first spring (118a) and bounded by the intermediate body member (112) and the distal body member (110), the second chamber containing the second spring (118b) and bounded by the intermediate body member (112) and the proximal body member (114); and
a moveable support member (116) affixed to the proximal body member (114), wherein the pushing and latching mechanism (124) is further configured to push the moveable support member (116) towards the column end fitting (104).

3. The column-coupling apparatus as recited in claim 1, wherein the housing (308) is an external housing, and wherein at least one of the first (100a) and second (100b) tubing coupling apparatuses, further comprises:
a housing (302) comprising:
a supporting structure for supporting the end fitting; and
a bore or cavity (326) having a portion within which a portion of the at least one body member slidably moves during the pushing of the at least one body member by the pushing and latching mechanism (324), wherein the at least one body member comprises a piston (303).

4. The column-coupling apparatus as recited in claim 3, wherein at least a portion of the first spring (318a) of at least one of the first and second tubing coupling apparatuses is disposed within the second spring (318b) of the respective tubing coupling apparatus.

5. The column-coupling apparatus as recited in claim 3, wherein the first spring (318a) of at least one of the first and second tubing coupling apparatuses is a helically coiled spring having an outer diameter, wherein the second spring (318b) of the respective tubing coupling apparatus is a helically coiled spring having an inner diameter and wherein the first spring is disposed within a volume defined by the inner diameter of the second spring.

6. The column-coupling apparatus as recited in any of claim 3 to 5, wherein within at least one of the first and second tubing coupling apparatuses, the first force is transmitted from the first spring (318a) to the respective tubing (306) by means of a collar with a flange (319), the flange mating with a groove (314) in the tubing.

7. The column-coupling apparatus as recited in any of claims 3 to 6, wherein at least one of the first and second tubing coupling apparatuses further comprises a screw (317) threaded into a portion of the respective chamber (327) and operable to supply a predetermined compression to the respective first spring (318a).

8. The column-coupling apparatus as recited in any of claims 3 to 7 wherein the first spring (318a) of at least one of the first and second tubing coupling apparatuses is configured such that the first force is capable of exceeding an opposing fluid force associated with a typical maximum column operating pressure and wherein the second spring is configured such that the second force is capable of causing the deformable sealing member (323) to form a leak-free seal against the column end fitting (304b) when the column is at the typical maximum operating pressure.

## Patentansprüche

1. Säulenkopplungsvorrichtung zum Koppeln einer Flüssigkeitschromatographiesäule (103), die ein erstes Ende, das eine erste Säulenendarmatur aufweist, und ein zweites Ende umfasst, das eine zweite Säulenendarmatur aufweist, mit einer ersten Schlauchleitung und mit einer zweiten Schlauchleitung, wobei die Vorrichtung umfasst:
eine Basis oder ein Gehäuse (108, 308),
eine erste und eine zweite Schlauchleitungskopplungsvorrichtung, die an der Basis oder dem Gehäuse (108, 308) befestigt sind, wobei jede Schlauchleitungskopplungsvorrichtung zum Koppeln einer der ersten und der zweiten Säulenendarmatur mit einer der ersten und der zweiten Schlauchleitung dient, wobei jede Schlauchleitungskopplungsvorrichtung umfasst:
mindestens ein Körperelement (112, 114, 303), das mindestens eine Kammer umfasst,
eine erste Feder (118a, 318a) innerhalb der mindestens einen Kammer, wobei die erste Feder so konfiguriert ist, dass sie eine erste Kraft auf die jeweilige Schlauchleitung (6, 306) in einer Längsrichtung der jeweiligen Schlauchleitung und in Richtung der jeweiligen Säulenendarmatur (104, 304b) ausübt, wobei die erste Kraft von der ersten Feder (118a, 318a) auf die jeweilige Schlauchleitung (6, 306) entweder mittels einer ersten Buchse oder Unterlegscheibe (120a) und einer Klemmhülse (122a) oder mittels eines Kragens, einer Hülse oder eines Flansches (319) übertragen wird, die bzw. der an der jeweiligen Schlauchleitung (6, 306) befestigt ist oder mit dieser in engem Eingriff steht;
eine zweite Feder (118b, 318b) innerhalb der mindestens einen Kammer, wobei die zweite Feder so konfiguriert ist, dass sie eine zweite Kraft auf ein verformbares Dichtungselement (122b, 123, 125, 323) in einer Richtung parallel zu der Längsrichtung der jeweiligen Schlauchleitung (306) und in Richtung der jeweiligen Säulenendarmatur (304b) ausübt, wobei die zweite Kraft von der zweiten Feder (118b, 318b) auf das verformbare Dichtungselement (323) entweder direkt, mittels einer zweiten Buchse oder Unterlegscheibe (120b) oder mittels einer Druckplatte (320) übertragen wird, und
einen Schiebe- und Verriegelungsmechanismus (124, 324), der so konfiguriert ist, dass er das mindestens eine Körperelement (112), die erste Feder (118a, 318a) und die zweite Feder (118b, 318b) in Richtung der Säule (103) in einer Richtung parallel zu der Längsrichtung der jeweiligen Schlauchleitung und in Abwesenheit des Ausübens einer beliebigen Verdrehungsbewegung oder eines Drehmoments auf entweder die jeweilige Säulenendarmatur (104, 304b) oder die jeweilige Schlauchleitung (6, 306) schiebt.

2. Säulenkopplungsvorrichtung nach Anspruch 1, wobei das mindestens eine Körperelement jeder Schlauchleitungskopplungsvorrichtung ein Zwischenkörperelement (112) ist, das ein erstes Ende des Zwischenkörperelements und ein zweites Ende des Zwischenkörperelements umfasst, wobei die mindestens eine der ersten (100a) und der zweiten (100b) Schlauchleitungskopplungsvorrichtung ferner umfasst:
ein proximales Körperelement (114), das ein erstes Ende, das so konfiguriert ist, dass es mit der Säulenendarmatur (104) zusammenpasst, und ein zweites Ende aufweist, das so konfiguriert ist, dass es an dem ersten Ende des Zwischenkörperelements (112) angebracht ist; und
ein distales Körperelement (110), das an dem zweiten Ende des Zwischenkörperelements (112) angebracht ist,
wobei die mindestens eine Kammer eine erste Kammer und eine zweite Kammer umfasst, wobei die erste Kammer die erste Feder (118a) enthält und durch das Zwischenkörperelement (112) und das distale Körperelement (110) begrenzt ist, wobei die zweite Kammer die zweite Feder (118b) enthält und durch das Zwischenkörperelement (112) und das proximale Körperelement (114) begrenzt ist; und
ein bewegliches Stützelement (116), das an dem proximalen Körperelement (114) befestigt ist, wobei der Schiebe- und Verriegelungsmechanismus (124) ferner so konfiguriert ist, dass er das bewegliche Stützelement (116) in Richtung der Säulenendarmatur (104) schiebt.

3. Säulenkopplungsvorrichtung nach Anspruch 1, wobei das Gehäuse (308) ein Außengehäuse ist und wobei mindestens eine der ersten (100a) und der zweiten (100b) Schlauchleitungskopplungsvorrichtung ferner umfasst:
ein Gehäuse (302), das umfasst:
eine Stützstruktur zum Stützen der Endarmatur; und
eine Bohrung oder einen Hohlraum (326), der einen Abschnitt aufweist, innerhalb dessen sich ein Abschnitt des mindestens einen Körperelements während des Schiebens des mindestens einen Körperelements durch den Schiebe- und Verriegelungsmechanismus (324) gleitend bewegt, wobei das mindestens eine Körperelement einen Kolben (303) umfasst.

4. Säulenkopplungsvorrichtung nach Anspruch 3, wobei mindestens ein Abschnitt der ersten Feder (318a) von mindestens einer der ersten und der zweiten Schlauchleitungskopplungsvorrichtung innerhalb der zweiten Feder (318b) der jeweiligen Schlauchkopplungsvorrichtung angeordnet ist.

5. Säulenkopplungsvorrichtung nach Anspruch 3, wobei die erste Feder (318a) von mindestens einer der ersten und der zweiten Schlauchleitungskopplungsvorrichtung eine spiralförmig gewickelte Feder ist, die einen Außendurchmesser aufweist, wobei die zweite Feder (318b) der jeweiligen Schlauchleitungskopplungsvorrichtung eine spiralförmig gewickelte Feder ist, die einen Innendurchmesser aufweist, und wobei die erste Feder innerhalb eines Volumens angeordnet ist, das durch den Innendurchmesser der zweiten Feder definiert ist.

6. Säulenkopplungsvorrichtung nach einem der Ansprüche 3 bis 5, wobei innerhalb mindestens einer der ersten und der zweiten Schlauchleitungskopplungsvorrichtung die erste Kraft von der ersten Feder (318a) auf die jeweilige Schlauchleitung (306) mittels eines Kragens mit einem Flansch (319) übertragen wird, wobei der Flansch mit einer Nut (314) in der Schlauchleitung zusammenpasst.

7. Säulenkopplungsvorrichtung nach einem der Ansprüche 3 bis 6, wobei mindestens eine der ersten und der zweiten Schlauchleitungskopplungsvorrichtung ferner eine Schraube (317) umfasst, die in einen Abschnitt der jeweiligen Kammer (327) geschraubt ist und funktionsfähig ist, um der jeweiligen ersten Feder (318a) eine vorbestimmte Komprimierung zuzuführen.

8. Säulenkopplungsvorrichtung nach einem der Ansprüche 3 bis 7, wobei die erste Feder (318a) von mindestens einer der ersten und der zweiten Schlauchleitungskopplungsvorrichtung so konfiguriert ist, dass die erste Kraft in der Lage ist, eine entgegengesetzte Fluidkraft zu überschreiten, die einem typischen maximalen Säulenbetriebsdruck zugeordnet ist, und wobei die zweite Feder so konfiguriert ist, dass die zweite Kraft in der Lage ist, das verformbare Dichtungselement (323) zu veranlassen, eine leckfreie Abdichtung gegenüber der Säulenendarmatur (304b) zu bilden, wenn sich die Säule auf dem typischen maximalen Betriebsdruck befindet.

## Revendications

1. Appareil d'accouplement de colonne permettant d'accoupler une colonne de chromatographie liquide (103) comprenant une première extrémité ayant un premier raccord d'extrémité de colonne et une seconde extrémité ayant un second raccord d'extrémité de colonne à un premier tubage et à un second tubage, l'appareil comprenant :
une base ou un logement (108, 308) ;
un premier et un second appareil d'accouplement de tubage attachés à la base ou au logement (108, 308), chaque appareil d'accouplement de tubage permettant d'accoupler l'un des premier et second raccords d'extrémité de colonne à l'un des premier et second tubages, chaque appareil d'accouplement de tubage comprenant :
au moins un élément de corps (112, 114, 303) comprenant au moins une chambre ;
un premier ressort (118a, 318a) au sein de l'au moins une chambre, le premier ressort conçu de façon à appliquer une première force au tubage respectif (6, 306) dans une direction longitudinale du tubage respectif et en direction du raccord d'extrémité de colonne respectif (104, 304b), la première force étant transmise du premier ressort (118a, 318a) au tubage respectif (6, 306) soit au moyen d'une première douille ou rondelle (120a) et d'une ferrule (122a), soit au moyen d'un collier, d'un manchon ou d'une bride (319) qui est attaché à ou solidement en prise avec le tube respectif (6, 306) ;
un second ressort (118b, 318b) au sein de l'au moins une chambre, le second ressort conçu pour appliquer une seconde force à un élément d'étanchéité déformable (122b, 123, 125, 323) dans une direction parallèle à la direction longitudinale du tubage respectif (306) et en direction du raccord d'extrémité de colonne respectif (304b), la seconde force étant transmise du second ressort (118b, 318b) à l'élément d'étanchéité déformable (323) soit directement, au moyen d'une seconde douille ou rondelle (120b) soit au moyen d'une plaque de poussée (320) ; et
un mécanisme de poussée et verrouillage (124, 324) conçu pour pousser l'au moins un élément de corps (112), le premier ressort (118a, 318a) et le second ressort (118b, 318b) en direction de la colonne (103) dans une direction parallèle à la direction longitudinale du tubage respectif et en l'absence d'application d'un quelconque mouvement de torsion ou couple soit au raccord d'extrémité de colonne respectif (104, 304b) soit au tubage respectif (6, 306).

2. Appareil d'accouplement de colonne selon la revendication 1, dans lequel l'au moins un élément de corps de chaque appareil d'accouplement de tubage est un élément de corps intermédiaire (112) comprenant une première extrémité d'élément de corps intermédiaire et une seconde extrémité d'élément de corps intermédiaire, l'au moins un des premier (100a) et second (100b) appareils d'accouplement de tubage comprenant en outre :
un élément de corps proximal (114) ayant une première extrémité conçue pour s'apparier avec le raccord d'extrémité de colonne (104) et une seconde extrémité conçue pour se fixer à la première extrémité de l'élément de corps intermédiaire (112) ; et
un élément de corps distal (110) fixé à la seconde extrémité de l'élément de corps intermédiaire (112),
l'au moins une chambre comprenant une première chambre et une seconde chambre, la première chambre contenant le premier ressort (118a) et étant délimitée par l'élément de corps intermédiaire (112) et l'élément de corps distal (110), la seconde chambre contenant le second ressort (118b) et étant délimitée par l'élément de corps intermédiaire (112) et l'élément de corps proximal (114) ; et
un élément de support mobile (116) attaché à l'élément de corps proximal (114), le mécanisme de poussée et verrouillage (124) étant conçu en outre pour pousser l'élément de support mobile (116) en direction du raccord d'extrémité de colonne (104).

3. Appareil d'accouplement de colonne selon la revendication 1, dans lequel le logement (308) est un logement externe, et dans lequel au moins l'un des premier (100a) et second (100b) appareils d'accouplement de tubage, comprend en outre :
un logement (302) comprenant :
une structure de support permettant de supporter le raccord d'extrémité ; et
un alésage ou une cavité (326) ayant une partie au sein de laquelle une partie de l'au moins un élément de corps se déplace de manière coulissante pendant la poussée de l'au moins un élément de corps par le mécanisme de poussée et verrouillage (324), l'au moins un élément de corps comprenant un piston (303).

4. Appareil d'accouplement de colonne selon la revendication 3, dans lequel au moins une partie du premier ressort (318a) d'au moins l'un des premier et second appareils d'accouplement de tubage est disposée au sein du second ressort (318b) de l'appareil d'accouplement de tubage respectif.

5. Appareil d'accouplement de colonne selon la revendication 3, dans lequel le premier ressort (318a) d'au moins l'un des premier et second appareils d'accouplement de tubage est un ressort hélicoïdal en spirale ayant un diamètre externe, le second ressort (318b) de l'appareil d'accouplement de tubage respectif est un ressort hélicoïdal en spirale ayant un diamètre interne et dans lequel le premier ressort est disposé au sein d'un volume défini par le diamètre interne du second ressort.

6. Appareil d'accouplement de colonne selon l'une quelconque des revendications 3 à 5, dans lequel au sein d'au moins l'un des premier et second appareils d'accouplement de tubage, la première force est transmise du premier ressort (318a) au tubage respectif (306) au moyen d'un collier avec une bride (319), la bride s'appariant avec une rainure (314) dans le tubage.

7. Appareil d'accouplement de colonne selon l'une quelconque des revendications 3 à 6, dans lequel au moins l'un des premier et second appareils d'accouplement de tubage comprend en outre une vis (317) filetée dans une partie de la chambre respective (327) et fonctionnelle pour fournir une compression prédéterminée au premier ressort respectif (318a).

8. Appareil d'accouplement de colonne selon l'une quelconque des revendications 3 à 7 dans lequel le premier ressort (318a) d'au moins l'un des premier et second appareils d'accouplement de tubage est conçu de telle sorte que la première force est capable de dépasser une force de fluide opposée associée à une pression maximale typique de fonctionnement de colonne et dans lequel le second ressort est conçu de telle sorte que la seconde force est capable d'amener l'élément d'étanchéité déformable (323) à former un joint d'étanchéité sans fuite contre le raccord d'extrémité de colonne (304b) lorsque la colonne est à la pression maximale typique de fonctionnement.
